# EUROPEAN PATENT SPECIFICATION

(11) **EP 2 414 701 B1**
(45) Date of publication and mention of the grant of the patent: **17.04.2013**
(21) Application number: 10711428.2
(22) Date of filing: 03.03.2010
(51) Int. Cl.: F16F 15/14, F16F 15/22

(54) **ARRANGEMENT FOR AND METHOD OF ATTENUATING THE VIBRATION OF A PISTON ENGINE AND A PISTON ENGINE**
ANORDNUNG UND VERFAHREN ZUR DÄMPFUNG VON VIBRATIONEN EINES HUBKOLBENMOTORS UND HUBKOLBENMOTOR
DISPOSITIF ET PROCEDE POUR ATTENUER LA VIBRATION D'UN MOTEUR A PISTON ET MOTEUR A PISTON

(30) Priority: 30.03.2009 FI 20095332
(43) Date of publication of application: 08.02.2012
(73) Proprietor: Wärtsilä Finland Oy, 65380 Vaasa (FI)
(72) Inventor: NYNÄS, Håkan, FI-65280 Vaasa (FI)
(74) Representative: Ansala, Jyrki Matti
(86) International application number: PCT/FI2010/050163
(87) International publication number: WO 2010/112665

(56) References cited:
- EP-A2- 0 103 692
- WO-A1-2005/038288
- DE-U- 7 514 380
- SU-A1- 1 153 144
- SU-A1- 1 566 116

## Description

### Technical field

The present invention relates to a method of attenuating vibration of a piston engine according to the preamble of claim 1. The invention relates also to a piston engine having at least one reciprocating piston arranged in a cylinder, the piston being coupled to a crankshaft of the engine according to the preamble of claim 6. Further, the invention relates to a method of attenuating vibration of a piston engine, in which method the vibration is attenuated during the operation of the engine by a tuned mass damper having at least one vibrating mass element and at least one spring element arranged in connection with the engine, and in which method the excitations from the engine provide vibration of the mass element of the damper attenuating the vibration of the piston engine according to the preamble of claim 11.

### Background art

The vibration of a piston engine is known as such, and in order to reduce it there are a number of various solutions. In engines there can be noted vibration forms of which both the engine and the auxiliary devices attached in connection therewith, such as a compressor or compressors, are part of. In this case it is a matter of a global vibration form, i.e. the engine and its auxiliary constructions together form a vibration system.

Different types of piston engine configurations have either free forces and/or free moments that have to be outbalanced. These can exist in different orders. For example an in-line 4-cylinder engine has free forces of the 2^{nd} order but no free moments.

The free forces are originating from the oscillating of the pistons and connecting rods. These cannot be fully out-balanced by counterweights on the crankshaft. The forces that have to be outbalanced are depending on the oscillating (masses) forces of the engine and engine speed.

In all types of vibration, mainly the mass and gas forces of the engine act as an excitation. A special difficulty in vibration dampening of engines is that the vibration properties of engines of different sizes (number of cylinders, cylinder diameter etc.) differ from each other. Further, the running speed of the engine also has an effect on the vibration.

It is known to use rotating balancing shafts. These shafts are driven from the crank shaft and are rotating at the double speed of the crankshaft speed (in the case of 4 cylinder in-line engines). The shafts are typically arranged in pairs and are rotating in different direction relative to each other. They are also synchronised to the crank shaft so that the resulting forces are outbalancing the forces from the engine.

Such rotating balancing shaft are effective particularly in suppressing 2^{nd} order vibration. However, such constructions have some drawbacks. The rotating shaft is an additional element which must be serviced and it also increases inertia of the moving parts of the engine. Driving of such rotating balancing shafts causes also parasitic losses. This in turn decreases the engine's performance in transitional operation. Additionally continuously rotating balancing shafts are somewhat prone to malfunctions and require a considerable amount of service.

In small engines such as car engines a common practise is to run the engine installed on very soft rubber elements. The installation is running at an overcritical speed, well over the frequency induced by the engine. In such a case the engine forces are not dampened inside the engine, but the vibration is intended to be prevented from reaching the car body by the soft engine suspensions with soft rubber elements. This kind of an arrangement is difficult to use on bigger engines, like those intended to be used as ship propulsion prime movers and auxiliary engines having their cylinder diameter greater than or equal to 200 mm and/or capable of producing power over 150 kW / cylinder. One reason is that it is hard to find suspension elements with low enough frequency. The other reason is the displacement of the engine while running. This makes all connections to the engine very difficult to arrange.

Dampers have been developed for dampening the vibrations in which an oscillating piece supported by springs is allowed to move in a space filled with a dampening medium, such as gas or fluid. In order to dampen the vibrations, US patent 5816373, for example, discloses a solution, in which an oscillating piece is arranged between springs in a space containing compressible gas. Because the operation of the damper depends on, among other things, the mass of the oscillating piece and its dimensions (throttling), the properties of the gas and the properties of the springs, such a solution will always have to be dimensioned and produced individually for dampening a vibration of a certain frequency.

In US patent 6029541 there is shown a reciprocating piston machine in which a spring-biased balancing mass is arranged to be reciprocated under control of a cam member in the crank shaft.

US 1640634 disclose an internal combustion engine in which a spring-controlled mass is reciprocated under control of an actuator guided by the crank shaft of the engine.

Documents DE 7 514 380 U and SU 1 153 144 A1 disclose an arrangement for attenuating the vibration of a piston engine comprising a tuned mass damper having at least one mass element and at least one spring element, in which arrangement the mass element is rotationally supported so that the rotational axis is offset from the axis of the center of gravity of the mass element and he at least one spring element is arranged with respect to the mass element in order to drive the mass element to a rest position of the tuned mass damper. The documents also disclose a method of attenuating the vibration of a piston engine in which method, during the operation of the engine, the vibration is attenuated by a tuned mass damper having at least one vibrating mass element and at least one spring element arranged in connection with the engine, in which method the excitations from the engine provide the vibration of the mass element of the damper for attenuating the vibration of the piston engine.

An object of the invention is to provide an arrangement for attenuating the vibration of a piston engine, comprising a tuned mass damper having at least one mass element and at least one spring element, which is more reliable in operation and less prone to malfunctions than prior art.

Another object of the invention is to provide a piston engine having at least one reciprocating piston arranged in a cylinder, the piston being coupled to a crankshaft of the engine, in which the attenuation of the vibration is realized effectively and in straightforward way.

It is still another object of the invention to provide a method of attenuating the vibration of a piston engine, in which method, during the operation of the engine, the vibration is attenuated by a tuned mass damper having at least one vibrating mass element and at least one spring .element arranged in connection with the engine, in which method the excitations from the engine provide vibration of the mass element of the damper attenuating the vibration of the piston engine, and which method provides efficient attenuation of the vibrations and provides reliable operation.

### Disclosure of the Invention

The objects of the invention are met as is disclosed in the claims 1, 6 and 11.

According to the invention an arrangement for attenuating the vibration of a piston engine comprises a tuned mass damper having at least one mass element and at least one spring element where the mass element is rotationally supported so that the rotational axis is offset from the axis of the center of gravity of the mass element and the at least one spring element is arranged with respect to the mass element, in order to drive the mass element to a rotational rest position of the tuned mass damper. The at least one spring element comprises a bar having its longitudinal axis substantially perpendicular to the plane in which the vibration movement of the mass element takes place.

The bar thus acts as a torsion spring, providing smaller influence on the tuned frequency.

The bar is removably fixed to the mass element at its first end and that rotational movement of the bar is locked at its second end. This way the bar acts as a torsional bar providing spring effect to the mass damper.

According to an embodiment of the invention the arrangement comprises at least one pair of tuned mass dampers which are interconnected with each other so that their rotational movement is synchronized. This way the total attenuation requirement may be met by several smaller units which make it easier to locate the arrangement to a piston engine.

According to a preferred embodiment of the invention the arrangement for attenuating the vibration of a piston engine the vibrating mass element comprises a mass body having two brackets at opposite ends of the mass body, a first shaft attached to the first bracket, the first shaft extending from the first bracket providing a first support area for supporting the vibrating mass rotatably, a second shaft attached to the second bracket, the second shaft extending from the second bracket providing a second support area for supporting the vibrating mass rotatably. Additionally the second shaft acts as a spring element, and the first and the second shaft are arranged to have coinciding central axes. Particularly but not only because of its form, this kind of a mass element may easily be used in connection with a piston engine.

According to still another embodiment of the invention the mass body comprises removably fixed additional masses, which provide the possibility to set the operational properties of the arrangement.

According to an embodiment of the invention a piston engine having at least one reciprocating piston arranged in a cylinder, the piston being coupled to a crankshaft of the engine, is provided with an arrangement for attenuating the vibration which comprises a tuned mass damper having at least one mass element and at least one spring element in which the mass element is rotationally supported so that the rotational axis is offset from the axis of the center of gravity of the mass element and the at least one spring element is arranged with respect to the mass element, having effect on the rotational position of the mass element.

According to another embodiment of the invention a piston engine having at least one reciprocating piston arranged in a cylinder, the piston being coupled to a crankshaft of the engine, is provided with an arrangement for attenuating the vibration which comprises a tuned mass damper having at least one mass element, which mass element comprises a mass body having two brackets at opposite ends of the mass body, a first shaft attached to the first bracket, the first shaft extending from the first bracket providing a first support area for supporting the vibrating mass rotatably, a second shaft attached to the second bracket, the second shaft extending from the second bracket providing a second support area for supporting the vibrating mass rotatably. Additionally the second shaft acts as a spring element, and the first and the second shaft are arranged to have coinciding central axes. This kind of a mass element may be easily used in connection with a piston engine particularly, but not only, because of its form.

The engine is preferably a so-called large piston engine having a cylinder diameter greater than or equal to 200 mm and/or capable of producing power over 150 kW / cylinder.

According to a preferred embodiment of the invention the arrangement for attenuating the vibration is arranged into the oil pan of the engine.

According to still another embodiment of the invention the arrangement for attenuating the vibration is arranged the block of the engine.

According to still another embodiment of the invention the arrangement for attenuating the vibration is a separate unit for attenuating the vibration of a piston engine removably fixed to the engine.

The invention is advantageous for a piston engine generator set comprising a piston engine and a generator coupled with each other is provided with an arrangement for attenuating the vibration of a piston engine generator set comprising a tuned mass damper having at least one mass element an a least one spring element, in which the mass element is rotationally supported so that the rotational axis is offset from the axis of the center of gravity of the mass element and the at least one spring element is arranged with respect to the mass element having effect on the rotational position of the mass element. This results in a very advantageous effects in operation since the piston engine generator set is operated mainly at constant running speed while producing electricity and the arrangement for attenuating the vibration suppresses the vibrations mostly at a frequency corresponding said running speed. Because the piston engine generator set has considerably narrow speed range in operation the arrangement for attenuating the vibration may be effectively dimensioned to attenuate only a substantially narrow frequency range.

### Brief Description of Drawings

In the following, the invention will be described with reference to the accompanying exemplary, schematic drawings, in which
Figure 1 illustrates a piston engine according to an embodiment of the invention,
Figure 2 illustrates a tuned mass damper according to an embodiment of the invention,
Figure 3 illustrates a tuned mass damper according to another embodiment of the invention,
Figure 4 illustrates a pair of tuned mass dampers in a piston engine according to still another embodiment of the invention,
Figure 5 illustrates a pair of tuned mass dampers in a piston engine according to still another embodiment of the invention,
Figure 6 illustrates still another embodiment of the invention,
Figure 7 illustrates still another embodiment of the invention,
Figure 8 illustrates a preferable positioning of a tuned mass damper according to an embodiment of the invention, and
Figure 9 illustrates still another embodiment of the invention.

### Detailed Description of Drawings

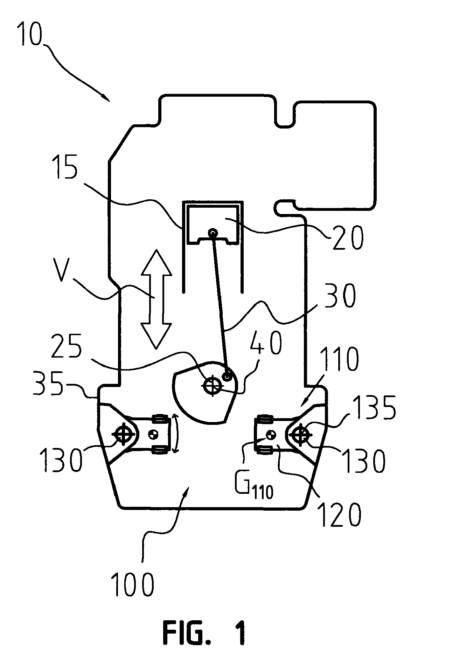

Figure 1 schematically shows a front view of a piston engine 10. The engine comprises at least one cylinder 15 in which a piston 20 is arranged to reciprocate during the operation of the engine in a manner known as such. The piston 20 is connected to the crank shaft 25 of the engine by means of a connecting rod 30. While the engine is running the reciprocating movement of the piston, or pistons when the engine is a multi-cylinder engine, causes vibration of the engine, the vibration being schematically illustrated with the arrow V. In order to attenuate the vibration the engine is provided with an arrangement 100_for attenuating the vibration attached to engine. In the embodiment shown in Figure 1 the arrangement 100 for attenuating the vibration is attached to the oil sump 35 of the engine which is an advantageous location because this way the space therein may be efficiently utilized and the installation of the arrangement in the engine requires only minimal changes in the engine. It is conceivable that the design of the engine and the arrangement 100 is such that the arrangement for attenuating the vibration is attached to some other part of the engine, such as to the engine block.

It should be noted that in this embodiment the rotational axis 135 of the arrangement for attenuate vibration 100 coincides with the rotational axis 40 the crank shaft 25. This is a favourable way of arranging the arrangement for attenuating the vibration 100 in practise. In this way the management of the forces originating from the moving parts is more straightforward.

The arrangement for attenuating the vibration 100 comprises a tuned mass damper 110. The tuned mass damper operates so that its spring element - mass element -system is so tuned that there is a 180 degree phase shift in the movements of the engine and the mass damper. So, when the engine is moving in one direction its balancing mass element is moving in the opposite direction and therefore damping the movement of the engine. The mass damper includes at least one mass element 120 capable of being vibrated upon an excitation from the engine. The mass damper 110 includes also at least one spring element 130 which is arranged with respect to the mass element to affect its rotational position. The spring element 130 is arranged so that It drives the mass element to a rotational rest position of the tuned mass damper. That is a position which the assembly takes when there are no external forces except gravity effecting on the damper. The mass element is rotationally supported to be rotatable in respect of its rotational axis 135 against the spring force. The term rotatable means in practise a very small angular movement of rotational vibration induced be the vibration of the engine. The rotational axis 135 is arranged to be offset from the axis of center of gravity G₁₁₀ of the mass element. With the arrangement the vibrations of the piston engine may be efficiently attenuated.

No power is taken from the crankshaft to drive the arrangement for attenuating the vibration 100. This arrangement has smaller mechanical losses in running the system and gives a lower fuel consumption of the engine.

The piston engine is preferably a large piston engine having a cylinder diameter greater than or equal to 200 mm and/or capable of producing power over 150 kW / cylinder. The tuned mass damper is tuned to operate at a limited engine speed range. This range is determined so that the biggest effect is gained at the nominal speed of the engine. According to an embodiment of the invention the engine is coupled to an electric generator and it is operated at the limited engine speed range. Thus the tuned mass damper operates very effectively.

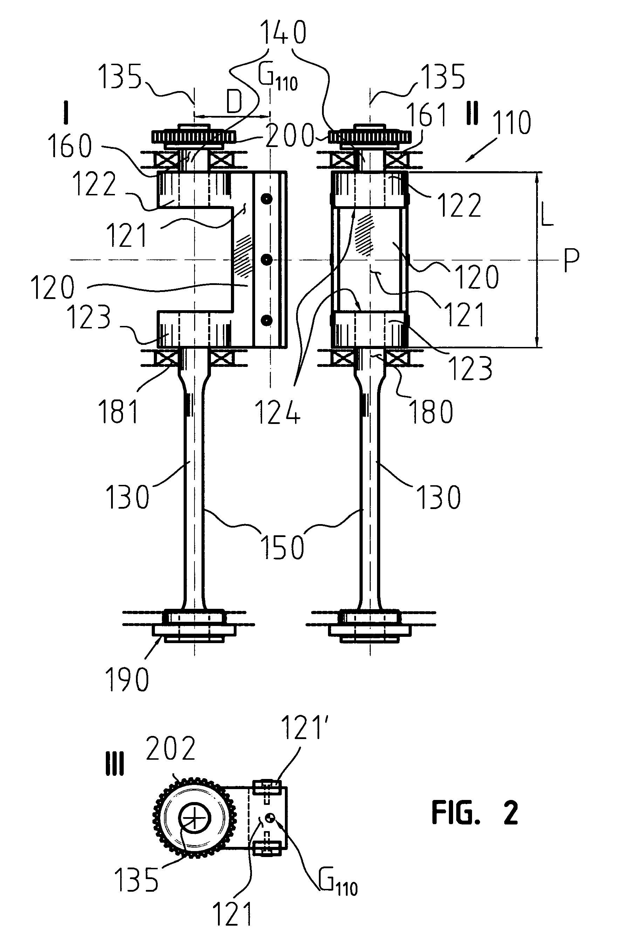

Figure 2 illustrates a tuned mass damper 110 according to an embodiment of the invention, section I showing the mass damper vertically from above, section II from a first side and section III showing the end view of the mass damper in section I. The tuned mass damper 100 comprises a mass element 120. The mass element comprises a mass body 121, which includes at least two brackets 122, 123 at opposite ends of the mass body 121. The brackets are provided with co-axially arranged attachment cavities 124, which are in this case circular through openings for shafts of the mass damper 110. The shafts comprise a first shaft 140 attached to the first bracket 122 and a second shaft 150 attached to the second bracket 123.

The first shaft 140 is extending from the first bracket 122 so that is provides a first support area 160 for supporting the vibrating mass rotatably by a bearing 161. Also the second shaft attached to the second bracket 123 is extending from the second bracket providing a second support area 180 for supporting the vibrating mass rotatably by a bearing or the like 181. The second shaft acts as torsional spring element and the first and the second shaft have coinciding central axes. The shafts are removably attached to the mass by way known as such.

The spring element 130 comprises a torsion bar. In this embodiment the second shaft 150 acts also as the spring element 130. Thus, in this context the bar may also be referred to with reference number 150. The second shaft 150 is attached to the mass element at its first end and the second end is provided with locking arrangement 190 by means of which the rotational movement of the second shaft (i.e. the torsion bar) is locked at its second end. The locking arrangement comprises a flange member which is releasably fastened e.g. into the body of the engine. The flange is provided with a cavity for the end part of the second shaft 150. Locking is accomplished e.g. by means of meshing splines in the end part of the shaft and the flange member.

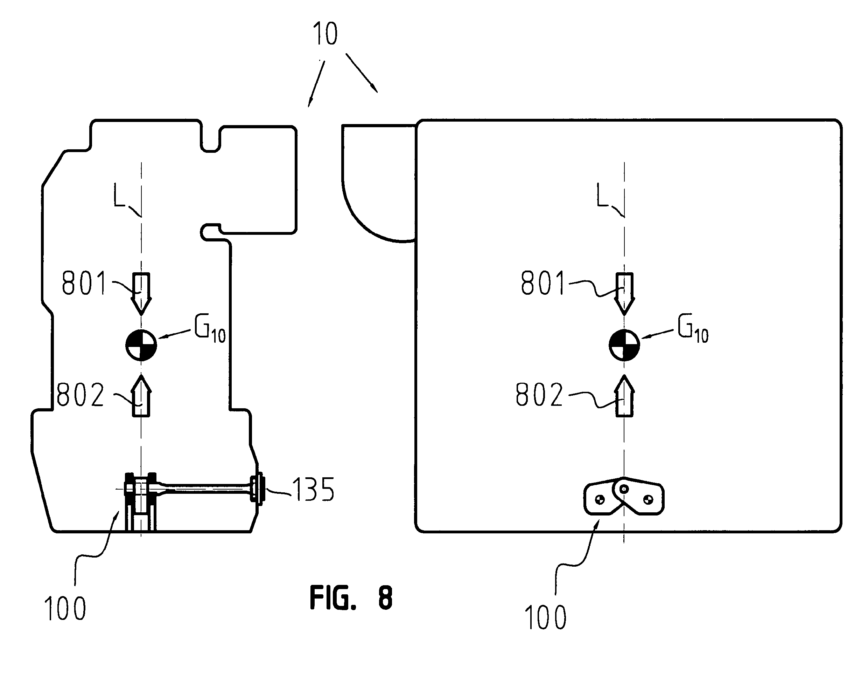

The length L of the mass element 120 is preferably at least twice the distance D of the axis of center of gravity G₁₁₀ from the rotational axis 135. Thus the space required by the arrangement is considerably narrow. The mass element 120 is arranged to vibrate, i.e. to perform reciprocating angular movement substantially in a plain P. The plain P is substantially perpendicular to the longitudinal axis of the spring element 130, i.e. the second shaft 150. When installed into an engine, the mass damper is arranged preferably so that the plain P is in a same direction as a vector of mass forces of the engine (Figure 8, reference 801). The plane P passes also through the center of gravity G₁₁₀ of the mass element.

The mass element is advantageously provided with removable mass units 121', the number of which is selected to be suitable for each case when tuning the mass damper.

The first shaft 140 is extending from the first bracket 122 so that is provides a first support area 160 for supporting the vibrating mass rotatably by a bearing 161.

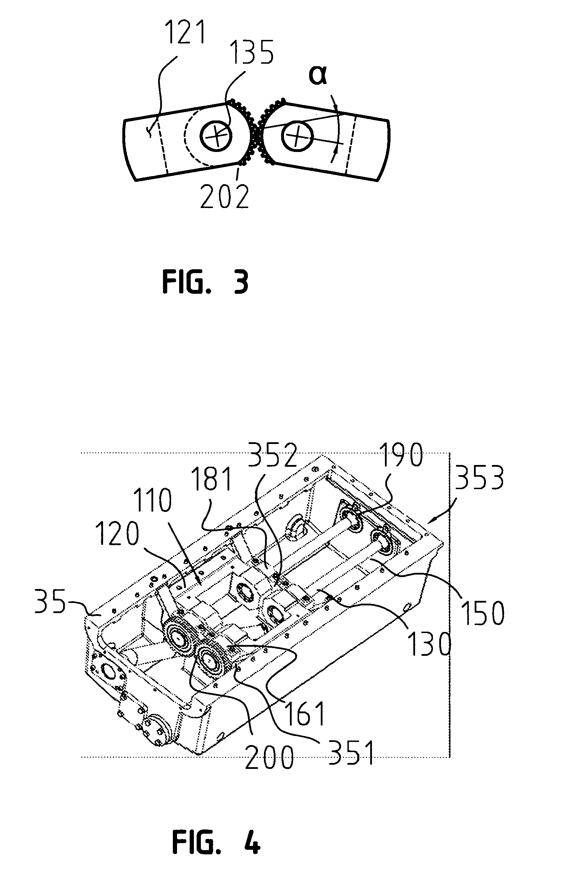

The mass damper 110 is provided with a synchronizing arrangement 200. That is the case the damper is intended to be a part of an arrangement comprising at least one pair of tuned mass dampers. The synchronizing arrangement 200 facilitates interconnecting the dampers with each other so that their rotational movement is synchronized. In the embodiment of Figure 3 the synchronizing arrangement 200 is a gear rim 202. This is possible because the rotational movement of the mass damper is a reciprocating movement between the maximum and the minimum positions in respect to a rest position. Figure 3 also illustrates the option of having the pair of mass dampers being at an angle α in the rest position.

In Figure 4 there is shown in more specific manner how the arrangement for attenuating the vibration 100 is attached to the oil sump 35 of the engine. The arrangement for attenuating the vibration 100 comprises a pair of tuned mass dampers which are interconnected with each other with a gear wheel at the front end 200 of each mass damper arranged with respect to the first shaft 140 (Fig.2). In order to attach and support the tuned mass dampers to the oil sump 35, the oil sump is provided with beds 351, 352 for the bearings 161, 181. A locking arrangement 190 of the torsional bar i.e. the second shaft 150 is arranged to the rear wall 353 of the oil sump, outside the oil sump. The mass dampers are preferably so arranged that the mass elements are at their rest position directed substantially on a same level. The level is advantageously substantially perpendicular to the main direction of the cylinder(s) of the engine.

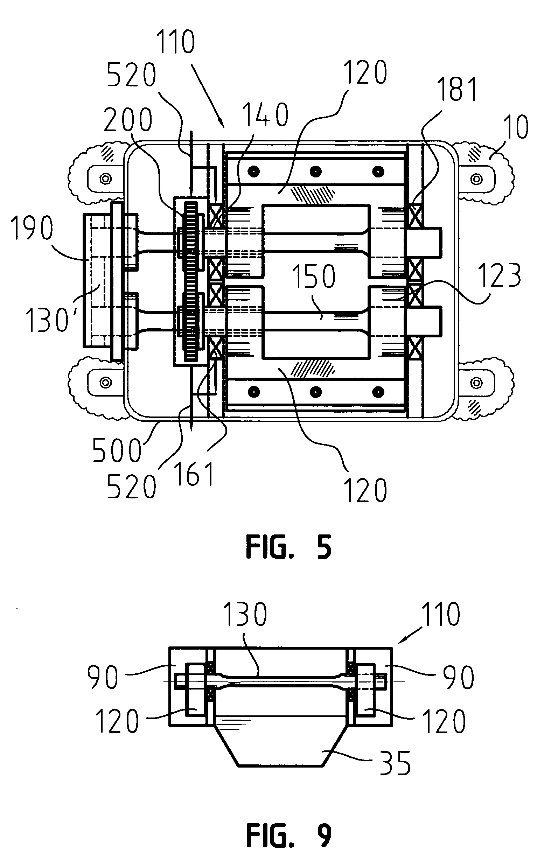

Figure 5 shows still another embodiment of the invention in which the same reference numbers as in Figure 2 have been used for the same or corresponding elements of the mass damper 110. Figure 5 shows an embodiment in which a pair of similar mass dampers 110 is arranged in an enclosure 500 forming a unit for attenuating the vibration of a piston engine 10. Additionally in this embodiment the first shaft 140 is hollow and the second shaft 150 is arranged to extend from the second bracket 123 through the first shaft to the front side of the mass damper. The second shaft 150 may be rotatably supported by the first shaft 140 or it may be led through without contact to the first shaft, i.e. so that there is a gap arranged between the inner surface of the first shaft and the outer surface of the second shaft. This embodiment saves space in the longitudinal direction.

The locking arrangement is provided in the respective manner as in Figure 2 with an addition of optional additional spring and/or damping arrangement 130', which is located outside the enclosure 500 making it possible to e.g. change the properties of the mass damper easily after installation or even during the operation of the engine.

Further, in Figure 5 there is shown a lubrication system 520 of the arrangement for attenuating the vibration of a piston engine by means of which e.g. lubrication oil may be circulated through the arrangement to lubricate the synchronizing arrangement 200 and/or the bearings 161,181. Particularly in an embodiment in which the arrangement is not located in the oil sump of the engine, additional lubrication is advantageous. The lubrication system 520 is preferably connected the lubrication arrangement of the piston engine.

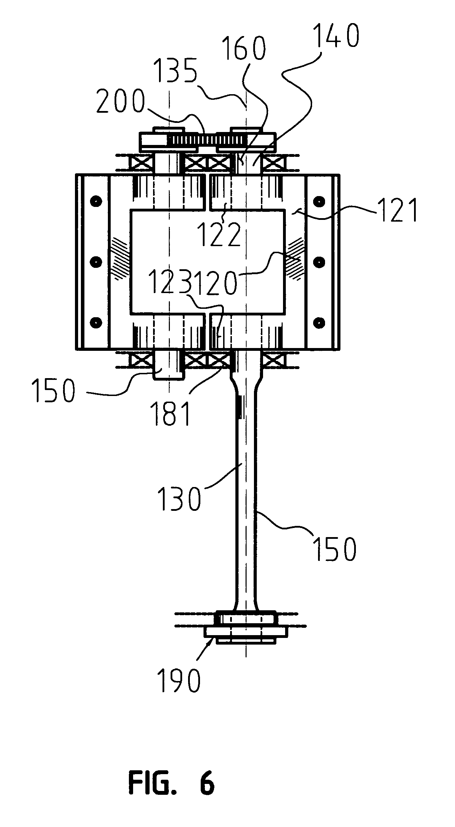

In Figure 6 there is shown a further embodiment of the invention in which there are two mass elements 120 arranged in synchronized connection with each other by means of a gear device as the synchronizing arrangement 200. Only one of the mass elements is provided with a spring element 130 the effect of which is transmitted to the other mass element through the synchronizing arrangement 200.

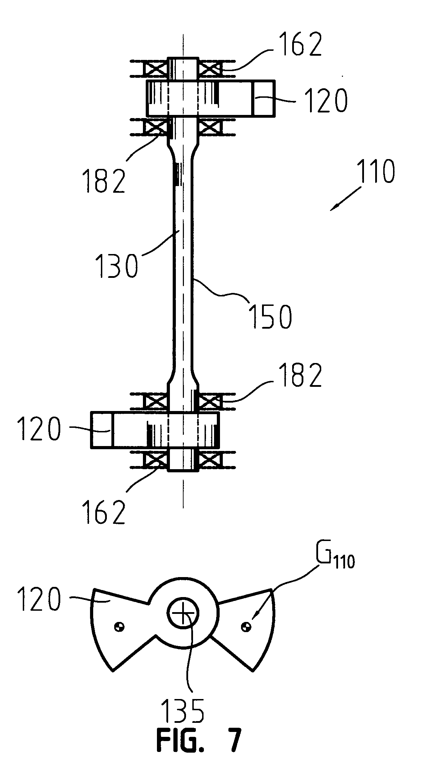

Figure 7 shows still another embodiment of the invention in which the tuned mass damper 110 comprises a shaft or a bar 150 substantially freely rotatably supported by bearings 162, 182. The shaft is provided with two mass elements 120 arranged to the bar 150 at a distance from each other. The bar 150 is arranged to act as a torsion spring 130 of the tuned mass damper. Preferably the mass elements are located at the ends of the torsion spring 130. The shaft is freely rotatable at least to the extent required by the operation of the mass damper but its rotation may be limited, however. In this case it is advantageous to arrange the mass elements such that the centre of gravity of the mass elements is at a vertically lower level than the rotational axis 135 of the arrangement. This enhances the static stability of the arrangement.

In Figure 8 there are shown schematic front and side views of an engine 10 which illustrates a preferable positioning of an arrangement for attenuating the vibration 100. The unit to be balanced (e.g. an engine or an engine-generator-set) has a center of gravity G₁₀. Arrow 801 illustrates a vector of mass forces of the engine and arrow 802 a vector of forces generated by the arrangement for attenuating the vibration 100. Preferably the engine's vector of mass forces substantially is on a same vertical line L as the vector of forces generated by the arrangement for attenuating the vibration 100. Preferably the line L coincides also with the plane P explained in connection with Figure 2.

In Figure 8 there is also shown an embodiment of the invention in which the rotational axis 135 of the arrangement for attenuating the vibration 100 departs from the rotational axis 40 of the crank shaft 25 (shown in Figure 1). More specifically, here the rotational axis 135 of the arrangement for attenuating the vibration 100 is perpendicular to the rotational axis 40 of the crank shaft 25.

In Figure 9 there is shown still another embodiment of the invention in which the mass damper 110 is arranged into the oil sump 35 of the engine so that the torsional spring element 130, i.e. the shaft, is position above the oil level in such a manner that it is cooled by splashed oil. Further, in this embodiment the mass elements 120 are arranged into a separate compartment or enclosure 90 so that the mass elements may move substantially free from oil bath, i.e. without dampening effect of the oil.

While the invention has been described herein by way of examples in connection with what are, at present, considered to be the most preferred embodiments, it is to be understood that the invention is not limited to the disclosed embodiments, but is intended to cover various combinations or modifications of its features and several other applications included within the scope of the invention, as defined in the appended claims. The details mentioned in connection with any embodiment above may be used in connection with another embodiment when such combination is technically feasible.

## Claims

1. An arrangement for attenuating the vibration of a piston engine comprising a tuned mass damper (110) having at least one mass element (120) and at least one spring element (130), in which arrangement the mass element is rotationally supported so that the rotational axis (135) is offset (D) from the axis of the center of gravity (G₁₁₀) of the mass element (120) and the at least one spring element (130) is arranged with respect to the mass element (120), in order to drive the mass element to a rotational rest position of the tuned mass damper (110), **characterised in that** the at least one spring element (130) comprises a bar (150) having its longitudinal axis perpendicular to the plane (P) in which the vibration movement of the mass element (120) takes place.

2. An arrangement for attenuating the vibration of a piston engine according to claim 1, **characterised in that** the bar (150) is removably fixed to the mass element (120) at its first end and that the rotational movement of the bar is locked (190) at its second end.

3. An arrangement for attenuating the vibration of a piston engine according to anyone of the claims 1 - 2, **characterised in that** the arrangement comprises at least one pair of tuned mass dampers which are interconnected with each other so that their rotational movement is synchronized.

4. An arrangement for attenuating the vibration of a piston engine according to anyone of the claims 1 - 2, **characterised in that** the vibrating mass element (120) comprises a mass body having two brackets at opposite ends of the mass body, a first shaft attached to the first bracket, the first shaft extending from the first bracket providing a first support area for supporting the vibrating mass rotatably, a second shaft attached to the second bracket, the second shaft extending from the second bracket providing a second support area for supporting the vibrating mass rotatably, wherein the second shaft acts as a spring element, and that the fist and the second shaft have coinciding central axes.

5. An arrangement for attenuating the vibration of a piston engine according to claim 4, **characterised in that** the mass body comprises removably fixed additional masses.

6. A piston engine having at least one reciprocating piston arranged in a cylinder, the piston being coupled to a crankshaft of the engine, **characterized in that** the engine is provided with an arrangement for attenuating the vibration according to anyone of the claims 1- 5.

7. A piston engine according to claim 6, **characterized in that** the arrangement for attenuating the vibration is arranged into the oil pan of the engine.

8. A piston engine according to claim 6, **characterized in that** the arrangement for attenuating the vibration is arranged so that its rotational axis coincides with the rotational axis the crank shaft.

9. A piston engine according to claim 6, **characterized in that** the arrangement for attenuating the vibration is arranged the block of the engine.

10. A piston engine according to claim 6, **characterized in that** the arrangement for attenuating the vibration is a separate unit for attenuating the vibration of a piston engine removably fixed to the engine.

11. A method of attenuating the vibration of a piston engine in which method, during the operation of the engine, the vibration is attenuated by a tuned mass damper having at least one vibrating mass element and at least one spring element arranged in connection with the engine, in which method the excitations from the engine provide the vibration of the mass element of the damper for attenuating the vibration of the piston engine, and the vibration movement of the mass element is guided to take place as rotational movement in respect to the rotational axis of the mass element, **characterised in that** the at least one spring element provides rotational spring effect by means of torsional effect.

12. A method of attenuating the vibration of a piston engine according to claim 11, **characterised in that** the at least one spring element provides rotational spring effect to the mass element.

13. A method of attenuating the vibration of a piston engine according to anyone of the claims 11 - 12, **characterised in that** the vibration of the piston engine is attenuated by at least one pair of tuned mass dampers the vibration movements of which are synchronized.

14. A method of attenuating the vibration of a piston engine according to anyone of the claims 11 - 12, **characterised in that** the movement of the mass element substantially coincides with the longitudinal axis of the cylinder of the piston engine.

## Patentansprüche

1. Anordnung zum Dämpfen der Schwingung eines Kolbenmotors, umfassend einen Schwingungstilger (110) mit zumindest einem Masseelement (120) und zumindest einem Federelement (130), bei welcher Anordnung das Masseelement so drehbar gehalten wird, dass die Drehachse (135) von der Achse des Schwerpunkts (G₁₁₀) des Masseelements (120) versetzt (D) ist, und das zumindest eine Federelement (130) in Bezug auf das Masseelement (120) angeordnet ist, um das Masseelement in eine Drehruheposition des Schwingungstilgers (110) anzutreiben, **dadurch gekennzeichnet, dass** das zumindest eine Federelement (130) eine Stange (150) umfasst, deren Längsachse rechtwinkelig zu der Ebene (P) verläuft, in der die Schwingungsbewegung des Masseelements (120) stattfindet.

2. Anordnung zum Dämpfen der Schwingung eines Kolbenmotors nach Anspruch 1, **dadurch gekennzeichnet, dass** die Stange (150) an ihrem ersten Ende abnehmbar an dem Masseelement (120) fixiert ist, und dass die Drehbewegung der Stange an ihrem zweiten Ende gesperrt (190) ist.

3. Anordnung zum Dämpfen der Schwingung eines Kolbenmotors nach einem der Ansprüche 1 bis 2, **dadurch gekennzeichnet, dass** die Anordnung zumindest ein Paar von Schwingungstilgern umfasst, die so miteinander verbunden sind, dass ihre Drehbewegung synchronisiert ist.

4. Anordnung zum Dämpfen der Schwingung eines Kolbenmotors nach einem der Ansprüche 1 bis 2, **dadurch gekennzeichnet, dass** das schwingende Masseelement (120) einen Massekörper mit zwei Klammern an entgegengesetzten Enden des Massekörpers, eine erste Welle, die an der ersten Klammer angebracht ist, wobei die erste Welle, die sich von der ersten Klammer erstreckt, einen ersten Haltebereich bereitstellt, um die schwingende Masse drehbar zu halten, und eine zweite Welle, die an der zweiten Klammer angebracht ist, wobei die zweite Welle, die sich von der zweiten Klammer erstreckt, einen zweiten Haltebereich bereitstellt, um die schwingende Masse drehbar zu halten, umfasst, wobei die zweite Welle als ein Federelement wirkt, und dass die erste und die zweite Welle übereinstimmende Mittelachsen aufweisen.

5. Anordnung zum Dämpfen der Schwingung eines Kolbenmotors nach Anspruch 4, **dadurch gekennzeichnet, dass** der Massekörper abnehmbar fixierte zusätzliche Massen umfasst.

6. Kolbenmotor mit zumindest einem hin und her laufenden Kolben, der in einem Zylinder angeordnet ist, wobei der Kolben mit einer Kurbelwelle des Motors gekoppelt ist, **dadurch gekennzeichnet, dass** der Motor mit einer Anordnung zum Dämpfen der Schwingung nach einem der Ansprüche 1 bis 5 versehen ist.

7. Kolbenmotor nach Anspruch 6, **dadurch gekennzeichnet, dass** die Anordnung zum Dämpfen der Schwingung in der Ölwanne des Motors angeordnet ist.

8. Kolbenmotor nach Anspruch 6, **dadurch gekennzeichnet, dass** die Anordnung zum Dämpfen der Schwingung so angeordnet ist, dass ihre Drehachse mit der Drehachse der Kurbelwelle übereinstimmt.

9. Kolbenmotor nach Anspruch 6, **dadurch gekennzeichnet, dass** die Anordnung zum Dämpfen der Schwingung an dem Block des Motors angeordnet ist.

10. Kolbenmotor nach Anspruch 6, **dadurch gekennzeichnet, dass** die Anordnung zum Dämpfen der Schwingung eine gesonderte Einheit zum Dämpfen der Schwingung eines Kolbenmotors ist, die abnehmbar an dem Motor fixiert ist.

11. Verfahren zum Dämpfen der Schwingung eines Kolbenmotors, bei welchem Verfahren die Schwingung während des Betriebs des Motors durch einen Schwingungstilger mit zumindest einem schwingenden Masseelement und zumindest einem Federelement, die in Verbindung mit dem Motor angeordnet sind, gedämpft wird, bei welchem Verfahren die Erregungen von dem Motor die Schwingung des Masseelements des Dämpfers zum Dämpfen der Schwingung des Kolbenmotors bereitstellen, und die Schwingungsbewegung des Masseelements so geführt wird, dass sie als Drehbewegung in Bezug auf die Drehachse des Masseelements stattfindet, **dadurch gekennzeichnet, dass** das zumindest eine Federelement die Drehfederwirkung durch eine Torsionswirkung bereitstellt.

12. Verfahren zum Dämpfen der Schwingung eines Kolbenmotors nach Anspruch 11, **dadurch gekennzeichnet, dass** das zumindest eine Federelement dem Masseelement eine Drehfederwirkung verleiht.

13. Verfahren zum Dämpfen der Schwingung eines Kolbenmotors nach einem der Ansprüche 11 bis 12, **dadurch gekennzeichnet, dass** die Schwingung des Kolbenmotors durch zumindest ein Paar von Schwingungstilgern, deren Schwingungsbewegungen synchronisiert sind, gedämpft wird.

14. Verfahren zum Dämpfen der Schwingung eines Kolbenmotors nach einem der Ansprüche 11 bis 12, **dadurch gekennzeichnet, dass** die Bewegung des Masseelements im Wesentlichen mit der Längsachse des Zylinders des Kolbenmotors übereinstimmt.

## Revendications

1. Combinaison pour atténuer la vibration d'un moteur à piston comprenant un amortisseur à masse accordée (110) ayant au moins une masse (120) et au moins un élément à ressort (130), dans une combinaison où la masse est supportée par rotation de manière à ce que l'axe de rotation (135) soit contrebalancé (D) depuis l'axe du centre de gravité (G₁₁₀) de la masse (120) et l'au moins un élément à ressort (130) est disposé par rapport à la masse (120), dans le but de conduire la masse à une position de repos rotative de l'amortisseur à masse accordée (110), **caractérisée en ce que** l'au moins un élément à ressort (130) comprend une barre (150) ayant son axe longitudinal perpendiculaire au plan (P) où le mouvement de vibration de la masse (120) se produit.

2. Combinaison pour atténuer la vibration d'un moteur à piston selon la revendication 1, **caractérisée en ce que** la barre (150) est fixée de façon amovible à la masse (120) à sa première extrémité et que le mouvement rotatif de la barre est bloqué (190) à sa seconde extrémité.

3. Combinaison pour atténuer la vibration d'un moteur à piston selon l'une quelconque des revendications 1 - 2, **caractérisée en ce que** la combinaison comprend au moins une paire d'amortisseurs à masse accordée interconnectés l'un à l'autre pour que leur mouvement rotatif soit synchronisé.

4. Combinaison pour atténuer la vibration d'un moteur à piston selon l'une quelconque des revendications 1 - 2, **caractérisée en ce que** la masse en vibration (120) comprend un corps de masse ayant deux crochets à ses extrémités opposées, un premier arbre attaché au premier crochet, le premier arbre s'étendant depuis le premier crochet fournissant une première surface de support pour supporter la masse en vibration de manière rotative, un second arbre attaché au second crochet, le second arbre s'étendant depuis le second crochet fournissant une seconde surface de support pour supporter la masse en vibration de manière rotative, où le second arbre agit comme un élément de ressort, et que le premier et le second arbre ont des axes centraux coïncidant.

5. Combinaison pour atténuer la vibration d'un moteur à piston selon la revendication 4, **caractérisée en ce que** le corps de masse comprend des masses supplémentaires fixées de manière amovible.

6. Moteur à piston ayant au moins un piston réciproque disposé dans un cylindre, le piston étant couplé à un vilebrequin du moteur, **caractérisé en ce que** le moteur est fourni avec une combinaison pour atténuer la vibration selon l'une quelconque des revendications 1- 5.

7. Moteur à piston selon la revendication 6, **caractérisée en ce que** la combinaison pour atténuer la vibration est disposée dans le réservoir à huile du moteur.

8. Moteur à piston selon la revendication 6, **caractérise en ce que** la combinaison pour atténuer la vibration est disposée de manière à ce que son axe de rotation coïncide avec l'axe de rotation du vilebrequin.

9. Moteur à piston selon la revendication 6, **caractérisé en ce que** la combinaison pour atténuer la vibration est disposée dans le bloc du moteur.

10. Moteur à piston selon la revendication 6, **caractérisé en ce que** la combinaison pour atténuer la vibration est une unité séparée pour atténuer la vibration d'un moteur à piston fixé au moteur de manière amovible.

11. Procédé d'atténuation de la vibration d'un moteur à piston dans lequel, durant le fonctionnement du moteur, la vibration est atténuée par un amortisseur à masse accordée ayant au moins une masse en vibration et au moins un élément à ressort disposé en connexion avec le moteur, procédé dans lequel les excitations provenant le moteur fournissent la vibration de la masse de l'amortisseur pour atténuer la vibration du moteur à piston, et le mouvement de vibration de la masse est guidé pour se produire comme un mouvement de rotation par rapport à l'axe de rotation de la masse, **caractérisé en ce que** l'au moins un élément à ressort fournit un effet de ressort à rotation au moyen d'un effet de torsion.

12. Procédé d'atténuation de la vibration d'un moteur à piston selon la revendication 11, **caractérisé en ce que** l'au moins un élément à ressort fournit un effet de ressort à rotation à la masse.

13. Procédé d'atténuation de la vibration d'un moteur à piston selon l'une des revendications 11 - 12, **caractérisé en ce que** la vibration du moteur à piston est atténuée par au moins une paire d'amortisseurs à masse accordée dont les mouvements de vibration sont synchronisés.

14. Procédé d'atténuation de la vibration d'un moteur à piston selon l'une quelconque des revendications 11 - 12, **caractérisé en ce que** le mouvement de la masse coïncide substantiellement avec l'axe longitudinal du cylindre du moteur à piston.
